# EUROPEAN PATENT SPECIFICATION

(11) **EP 3 648 294 B1**
(45) Date of publication and mention of the grant of the patent: **14.09.2022**
(21) Application number: 18204289.5
(22) Date of filing: 05.11.2018
(51) Int. Cl.: H02J 7/34, H02J 4/00, B63J 3/02, B63H 21/17, H02J 3/32

(54) **PROPULSION SYSTEM WITH INTER SWITCHBOARD CONVERTER**
ANTRIEBSSYSTEM MIT UMRICHTER ZWISCHEN SCHALTANLAGEN
SYSTÈME DE PROPULSION AVEC CONVERTISSEUR ENTRE DES TABLEAUX ÉLECTRIQUES

(43) Date of publication of application: 06.05.2020
(73) Proprietor: Damen 40 B.V., 4200 AA Gorinchem (NL)
(72) Inventor: Lievense, Pieter, 4381 NK Vlissingen (NL)
(74) Representative: De Vries & Metman

(56) References cited:
- EP-A1- 2 709 229
- EP-A1- 3 035 477
- EP-A2- 2 966 740
- US-A1- 2009 156 068
- US-A1- 2015 027 124

## Description

### Field of the invention

The invention relates to a propulsion system controller for a propulsion system of a watercraft, a propulsion system comprising such a propulsion system controller and a watercraft comprising such a propulsion system controller.

The invention further relates to a method of controlling a propulsion system.

The invention also relates to a computer program product enabling a computer system to perform such a method.

### Background of the invention

Traditionally, watercraft have been propelled by combustion engines, e.g. diesel engines. Nowadays, more and more watercraft use electric propulsion. In large watercraft, the electric motors in such a propulsion system are generally supplied power at a constant voltage and frequency, which is then converted to a variable voltage with variable frequency with the help of converters in order to regulate the rotational speed of the electric motors. However, this DC-based installation requires converters with a high capacity, which have a high volume and cost and are therefore not suitable for smaller watercraft.

EP 2 966 740 A2 discloses a DC power system for marine applications and specifically a device comprising the features of the preamble of claim 1

US 2015/0027124 discloses a propulsion system in which the required inverter capacity is reduced compared to that used in a DC-based installation. US 2015/0027124 discloses the propulsion system operating at very low speeds in a first operating state using at least one power inverter. In this first operating state, the at least one power inverter can draw power from an onboard power system in order to make available an alternating voltage to the electric motors. The onboard power system can be supplied, for example, by a multi-fuel combustion set using LPG or LNG. In a second operating state, power is no longer supplied by way of the at least one power inverter, but by way of an internal combustion engine and generator coupled thereto. In a third operating mode, both ways of supplying power are combined.

A drawback of the propulsion system disclosed in US 2015/0027124 is that the at least one power inverter is only used to allow the propulsion system to operate at very low speeds.

### Summary of the invention

The invention is defined by a propulsion system controller, which is able to provide a multitude of functions with reduced power converter capacity, according to independent claim 1 and dependent claims 2 to 9, which define alternative embodiments. A propulsion system comprising a propulsion system controller is also defined in claims 10 and 11. Finally, a watercraft comprising a propulsion system is defined in claim 12.

The invention is further defined by a a method of controlling a propulsion system, which helps provide a multitude of functions with reduced power converter capacity, according to independent claim 13.

Furthermore the invention aims also at a corresponding computer program or suite of computer programs and a computer program product as described respectively in claims 14 and 15.

The propulsion system controller according to the invention is configured to control a propulsion system of a watercraft, said propulsion system comprising a variable voltage switchboard, a fixed voltage switchboard, an inter switchboard converter coupled to said variable voltage switchboard and said fixed voltage switchboard, said inter switchboard converter comprising a first power converter coupled to said variable voltage switchboard, a second power converter coupled to said fixed voltage switchboard and said first power converter, and a battery coupled to said first power converter and said second power converter, one or more electric propulsion motors coupled to said variable voltage switchboard, and one or more electric generators coupled to said fixed voltage switchboard.

Said controller can be set to one of a plurality of modes. Said controller is configured to, in a first of said plurality of modes, control said one or more electric generators to generate electricity at a constant voltage and a constant frequency, to control said second power converter to convert AC power from said one or more electric generators to DC power with a voltage suitable for said battery, and control said first converter to convert DC power from said second power converter and said battery to AC power with a voltage and a frequency corresponding to a speed or power selected for said one or more electric propulsion motors. Said controller is configured to, in a second of said plurality of modes, control said one or more electric generators not to generate electricity and control said first converter to convert DC power from said battery to AC power, said AC power being provided to at least said one or more electric propulsion motors.

Each of said first power converter and said second power converter may comprise a three-phase inverter, for example. Information indicating said voltage suitable for said battery may be obtained from a battery management system of said battery, for example. The controller may be part of the inter switchboard converter, for example.

The inventor has recognized that an inter grid converter comprising a battery and two power converters can be used to provide a multitude of functions with reduced power converter capacity in a hybrid propulsion system. In a hybrid propulsion system, propulsion can be achieved using a fueled power source at a first moment and through a stored energy source at a second moment. To use the multitude of functions, a selection can be made from a plurality of operating modes. In one of these modes, the battery is used to propel the electric propulsion motor(s) (zero-emission propulsion) and one of the converters is used to convert the DC power of the battery to AC power required by the propulsion motor(s). In another one of these modes, the battery is used for peak shaving. Peak shaving is useful when the propulsion motor(s) need to operate at low speeds and the inter switchboard converter alone delivers power to the propulsion motor(s) at variable voltage and frequency and when one or more electric generators coupled to the variable switchboard operates close to the limit curve, in order to prevent cyclic load variation on these electric generator(s).

The watercraft according to the invention may comprise a power grid, said power grid being coupled to said fixed voltage switchboard. The power grid supplies power to power consumers on the ship other than the electric propulsion motor(s). These power consumers typically require power with a fixed voltage and frequency, although the fixed voltage and frequency may differ per power consumer or per group of power consumers.

The propulsion system according to the invention may comprise a first switchboard and a second switchboard and said controller may be configured to select one of said first switchboard and said second switchboard as said variable voltage switchboard and select as said fixed voltage switchboard said first or second switchboard not selected as said variable voltage switchboard. The inventor has recognized that it is beneficial not to have a permanent fixed voltage switchboard and a permanent variable fixed voltage switchboard as usual, but to allow the roles of the physical switchboards to be set depending on the operating mode and thus to be flexible. The symmetry of this system provides maximum redundancy with a minimum of components.

Said one or more electric propulsion motors may be switchably coupled to said first switchboard and said second switchboard and said controller may be configured in said first mode and said second mode to cause a coupling between said one or more electric propulsion motors and said first or second switchboard selected as variable voltage switchboard. In this way, the electric propulsion motor(s), whose speed depends on the voltage and/or frequency of the supplied power, are coupled to the physical switchboard acting as variable voltage switchboard. The symmetry of this system provides maximum redundancy with a minimum of components.

Said watercraft may comprise a power grid, said power grid being switchably coupled to said first switch board and said second switchboard, and said controller may be configured in said first mode, said second mode or in another of said plurality of modes to cause a coupling between said power grid and said first or second switchboard selected as fixed voltage switchboard. In this way, the power consumers other than the electric propulsion motor(s), which require power with a fixed voltage and frequency, are coupled to the physical switchboard acting as fixed voltage switchboard. The symmetry of this system provides maximum redundancy with a minimum of components.

Said first switchboard may be connectable to a power connector on a shore or other watercraft. This allows the electric generator(s) to supply power to the shore or other watercraft or one or more electric generators on the shore or other watercraft to supply power to power consumers on the ship.

Said propulsion system may comprise one or more further electric generators coupled to said variable voltage switchboard. Said controller may be configured in said first mode and/or in another of said plurality of modes to control said one or more further electric generators to generate electricity at said voltage and said frequency corresponding to said speed or power selected for said one or more electric propulsion motors. By using one or more electric generators coupled to the fixed voltage switchboard and one or more electric generators coupled to the variable voltage switchboard, a high ship speed may be achieved, while the capacity of the power converters only depends on the power supplied by the electric generators coupled to the fixed voltage switchboard.

The method according to the invention comprises, in a first of a plurality of modes controlling said one or more electric generators to generate electricity at a constant voltage and a constant frequency, controlling said second power converter to convert AC power from said one or more electric generators to DC power with a voltage suitable for said battery, and controlling said first converter to convert DC power from said second power converter and said battery to AC power with a voltage and a frequency corresponding to a speed or power selected for said one or more electric propulsion motors.

Said method comprises in a second of said plurality of modes controlling said one or more electric generators not to generate electricity and controlling said first converter to convert DC power from said battery to AC power, said AC power being provided to at least said one or more electric propulsion motors. Said method may be performed by software running on a programmable device. This software may be provided as a computer program product.

The power grid of the watercraft is configured to receive AC power at a constant voltage and a constant frequency and is coupled to said fixed voltage switchboard. Said propulsion system comprises a first switchboard and a second switchboard and said controller is configured to select one of said first switchboard and said second switchboard as said variable voltage switchboard and select as said fixed voltage switchboard said first or second switchboard not selected as said variable voltage switchboard.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

As already discussed, the definition of the present invention includes a controller, a propulsion system, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

In an aspect not covered by the scope of the claims, but included because of illustrative purposes, code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

In an aspect not covered by the scope of the appended claims but included in this description because of illustrative purposes, these computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardwarebased systems that perform the specified functions or acts, or combinations of special purpose hardware and computer instructions.

### Brief description of the Drawings

These and other aspects of the invention are apparent from and will be further elucidated, by way of example, with reference to the drawings, in which:
Fig. 1 is a block diagram of a first embodiment of the propulsion system of the invention controlled by a first embodiment of the controller of the invention and the power connections of this system;
Fig. 2 is a block diagram depicting the first embodiment of the controller and its control connections;
Fig. 3 is a block diagram of a second embodiment of the propulsion system of the invention controlled by a second embodiment of the controller of the invention and the power connections of this system;
Fig. 4 is a flow diagram of an embodiment of the method of the invention; and
Fig. 5 is a block diagram of an exemplary data processing system for performing the methods of the invention.

Corresponding elements in the drawings are denoted by the same reference numeral.

### Detailed description of the Drawings

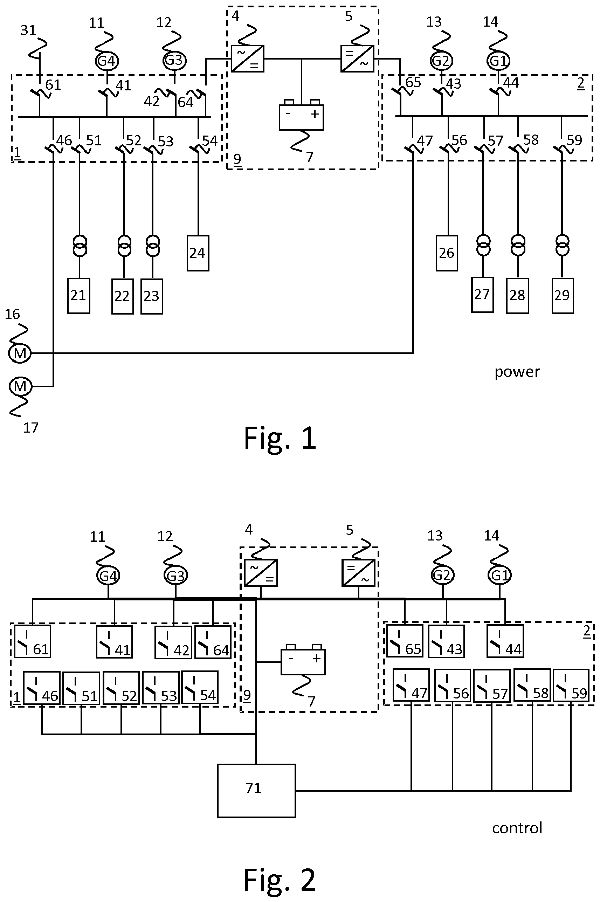

**Fig.1** shows a first embodiment of the propulsion system of the invention. This propulsion system is part of a watercraft and the connections between the components shown in **Fig.1** are power connections. Three important parts of the system are the aft switchboard **1,** the fore switchboard **2** and the inter switchboard converter **9.** The inter switchboard converter **9** is switchably coupled to the aft switchboard **1** via switch **64** and switchably coupled to the fore switchboard **2** via switch **65.**

Two diesel generators **11** and **12** are switchably coupled to the aft switchboard **1** via switches **41** and **42,** respectively. Two diesel generators **13** and **14** are switchably coupled to the fore switchboard **2** via switches **43** and **44,** respectively. In alternative embodiment, one or more of the electric generators **11-14** are another type of electric generators. Electric propulsion motors **16** and **17** are connected in parallel. Electric propulsion motors **16** and **17** are switchably coupled to aft switchboard 1 via switch **46.** Electric propulsion motors **16** and **17** are switchably coupled to fore switchboard **2** via switch **47.**

Furthermore, power consumers **21-24** are switchably coupled to the aft switchboard **1** via switches **51-54,** respectively, and power consumers **26-29** are switchably coupled to the fore switchboard **2** via switches **56-59,** respectively. The inter switchboard converter **9** is powering heavy consumers **24** and **26** at 690V without transformers. Heavy consumers **24** and **26** may include the chillers and big pumps. Other consumers **21-23** and **27-29,** including all sensitive consumers, are coupled via transformers. The aft switchboard **1** is connectable to a power connector on a shore or other watercraft via a shore connection **31.**

An advantageous feature of the propulsion system of **Fig.1** is the inter switchboard converter **9.** The inter switchboard converter **9** comprises an aft power converter **4** switchably coupled to the aft switchboard **1** via switch **64** and a fore power converter **5** switchably coupled to the fore switchboard **2** via switch **65.** The inter switchboard converter **9** further comprises a battery **7** coupled to both the aft power converter **4** and the fore power converter **5.** In the embodiment of **Fig.1****,** the battery **7** is coupled to the DC-link in the inter switch board converter **9** without battery converter. The aft power converter **4** and/or the fore power converter **5** may comprise a three-phase inverter, for example. For instance, power converters **4** and **5** may comprise two identical three-phase inverters that each include an LCL-filter.

The use of inter switchboard converter **9** reduces the required power converter, e.g. inverter, capacity. Furthermore, inter switchboard converter **9** can be used for different purposes in different modes. In a first mode, a propulsion system controller controls one or more of the diesel generators **13-14** to generate electricity at a constant voltage and a constant frequency, controls the fore power converter **5** to convert AC power from the one or more diesel generators **13-14** to DC power with a voltage suitable for the battery **7,** and controls the aft power converter **4** to convert DC power from the fore power converter **5** and the battery **7** to AC power with a voltage and a frequency corresponding to a speed or power selected for the electric propulsion motors **16** and **17.** Optionally, the controller may further control one or more of the diesel generators **11-12** to generate electricity at the voltage and the frequency corresponding to the speed or power selected for the electric propulsion motors **16** and **17.** Information indicating the voltage suitable for the battery **7** may be obtained from a battery management system of the battery **7,** for example.

In a second mode, the propulsion system controller controls the diesel generators **11-14** not to generate electricity and to control the aft power converter **4** to convert DC power from the battery **7** to AC power. This AC power is provided to the electric propulsion motors **16** and **17.** In the first mode, in order to prevent cyclic loading of the diesel generators **13** and/or **14,** it is possible to operate one or both power converters **4** and **5** of the inter switchboard converter **9** for speed or power control, or a combination of both, in addition to using the battery **7** for peak shaving. In the second mode, the battery **7** is used for zero-emission-propulsion, e.g. at a maximum speed of 7kts (e.g. 300kW for propulsion and 300kW for other consumers).

The inter switchboard converter **9** also makes it possible to select one of the two switchboards **1** and **2** as variable voltage switchboard and the other of the two switchboards **1** and **2** as fixed voltage switchboard. For example, in one mode, the aft switchboard **1** may be used as variable voltage switchboard and, in another mode, the fore switchboard **2** may be used as variable voltage switchboard.

In the embodiment of **Fig.1****,** the electric propulsion motors **16** and **17** are configured to receive AC power with a voltage and a frequency corresponding to a speed or power selected for the electric propulsion motors **16** and **17** and are coupled to the variable voltage switchboard. If the aft switchboard **1** is selected as variable voltage switchboard in a certain mode, switch **46** is closed and electric propulsion motors **16** and **17** are thereby coupled to the variable voltage switchboard. If the fore switchboard **2** is selected as variable voltage switchboard in a certain other mode, switch **47** is closed and electric propulsion motors **16** and **17** are thereby coupled to the variable voltage switchboard.

In the embodiment of **Fig.1****,** the power grid, i.e. either power consumers **21-24** or power consumers **26-29,** receives AC power at a constant voltage and a constant frequency and is coupled to the fixed voltage switchboard. If the aft switchboard **1** is selected as fixed voltage switchboard in a certain mode, switches **51-54** are closed and power consumers **21-24** are thereby coupled to the fixed voltage switchboard. If the fore switchboard **2** is selected as fixed voltage switchboard in a certain other mode, switches **56-59** are closed and power consumers **26-29** are thereby coupled to the fixed voltage switchboard.

Any one or more of diesel generators **11-14** may be used for providing electricity to the electric propulsion motors **16** and **17** and the power grid. For example, if the aft switch board **1** is selected as variable voltage switchboard and the fore switch board **2** is selected as fixed voltage switchboard, any one or more of the diesel generators **11-14** may be active, but the same may be true if the fore switchboard **2** is selected as variable voltage switchboard and the aft switchboard 1 is selected as fixed voltage switchboard.

The inter switchboard converter **9** installed between the aft switch board 1 and the fore switchboard **2** creates a symmetrical system that allows each of the power converters **4** and **5** to operate at fixed or variable voltage and frequency, as a power input or output port. The symmetry of the system provides maximum redundancy with a minimum of components.

Thus, in an alternative first mode or a third mode, the propulsion system controller could control one or more of the diesel generators **11-12** to generate electricity at a constant voltage and a constant frequency, could control the aft power converter **4** to convert AC power from the one or more diesel generators **11-12** to DC power with a voltage suitable for the battery **7,** and could control the fore power converter **5** to convert DC power from the aft power converter **4** and the battery **7** to AC power with a voltage and a frequency corresponding to a speed or power selected for the electric propulsion motors **16** and **17.**

In an alternative second mode or a fourth mode, the propulsion system controller could control the diesel generators **11-14** not to generate electricity and to control the fore power converter **5** to convert DC power from the battery **7** to AC power. This AC power is provided to the electric propulsion motors **16** and **17.** In an alternative embodiment, the selection of one of the two switchboards **1** and **2** as variable voltage switchboard and the other of the two switchboards **1** and **2** as fixed voltage switchboard is performed for a propulsion system in which the inter switchboard converter does not comprise a battery.

**Fig.2** depicts the first embodiment of the controller described above: controller **71.** The controller **71** is configured to control diesel generators **11-14,** i.e. to activate one or more of the diesel generators **11-14** and to control the speed of the diesel generators **11-14,** e.g. through an engine control module. The controller **71** is further configured to control the power converters **4** and **5,** e.g. to set the operating mode of the power converters, and to control the switches **41-44, 46-47, 51-54, 56-59, 61** and **64-65,** e.g. to open or close any of the switches in dependence on the operating mode of the propulsion system.

The controller **71** may also configured to obtain information indicating the voltage suitable for the battery **7** from the battery management system of the battery **7** and configure the power converters **4** and **5** based on this information so that the power converters **4** and **5** are able to control the DC-link voltage in the inter switchboard converter **9** such that battery charging and discharging proceed according to the recommendations of the supplier of the battery **7.**

Operation of the propulsion system and inter switchboard converter of **Fig.1** requires that the operator assigns one of the switchboards **1** and **2** to power the ship's grid. The operator is free to select either the aft switchboard **1** or the fore switchboard **2** as fixed voltage switchboard, and as soon as the selection is made it means that:
- The switchboard selected as fixed voltage switchboard will from now on be operated at a fixed voltage (e.g. 690V) and frequency (e.g. 60Hz). All big consumers, notably the chillers and big pumps will be powered directly from this switchboard, without transformers. All other consumers will be powered from this switchboard via transformers;
- The switchboard not selected as fixed voltage switchboard is selected as variable voltage switchboard and will from now on will be used at a voltage and frequency depending on the operating mode.

The fixed voltage switchboard can be powered in various ways:
1. by the electric propulsion motors (operating as a shaft generator), via the inter switchboard converter. The electric propulsion motors are then connected to the variable voltage switchboard.
2. by one or two diesel generators operated at reduced speed, via the inter switchboard converter. The inter switchboard converter is now used as micro grid inverter and the diesel generator(s) is(are) connected to the variable voltage switchboard.
3. by one or two diesel generators operated at nominal speed directly connected to the fixed voltage switchboard. The inter switchboard converter may now be used for other purposes, e.g. in V/f-control to power the electric motors for electric propulsion, or in micro grid inverter control to power the shore.

If the inter switchboard converter is used to power the electric propulsion motors, the electric propulsion motors are connected to the variable voltage switchboard and the inter switchboard converter is powered from the fixed voltage switchboard, which in turn is powered by one or two diesel generators operating at fixed speed. In the higher speed range, one or two diesel generators are connected to the variable voltage switchboard (i.e. in parallel to the inter switchboard converter output) and in that case these diesel generators are controlled to produce a frequency and voltage equal to that of the inter switchboard converter, according to the electric propulsion motor-demand.

The following operating modes may be defined:
- Mode 1 Shore to ship
- Mode 2 Ship to shore
- Mode 3 E-propulsion low power
- Mode 4 E-propulsion high power
- Mode 5 Microgrid
- Mode 6 Shaft generator
- Mode 7 Sailing on battery
- Mode 8 Microgrid on battery

In all defined operating modes, the ship's grid is powered from the fixed voltage switchboard. The battery is the only power source in operating modes 7 and 8, but the energy stored in the battery is available, in this embodiment, in all defined modes for the following functions:
- Peak shaving
- Black-out prevention

In the description below it is presumed that the fixed voltage switchboard operates at 690V 60Hz. However, this is an example to explain the invention; another voltage could also be selected.

### Operating mode 1 Shore to Ship

When the ship is powered from the shore, the inter switchboard converter will convert shore power to 690V 60Hz and deliver it to the fixed voltage switchboard. Heavy consumers that require 690V 60Hz are directly connected to the fixed voltage switchboard, all other consumers are connected via transformers. This is the normal Shore Power mode. In order to establish the shore connection, the inter switchboard converter synchronizes automatically to the live shore, while the ship's grid is still powered by own generators or by the battery. The following sub-modes are defined:
**Mode 1.1:** The shore powers the variable voltage switchboard. The inter switchboard converter powers the fixed voltage switchboard. No diesel generators are in operation.
**Mode 1.2:** The shore powers the variable voltage switchboard. The inter switchboard converter powers the fixed voltage switchboard. One or two diesel generators are connected to the variable voltage switchboard in parallel operation with the shore.
**Mode 1.3** The shore powers the variable voltage switchboard. The inter switchboard converter powers the fixed voltage switchboard. One or two diesel generators are connected to the fixed voltage switchboard in parallel operation with the inter switchboard converter.
**Mode 1.4:** The shore powers the variable voltage switchboard. The inter switchboard converter powers the fixed voltage switchboard. One or two diesel generators are connected to the variable voltage switchboard in parallel operation with the shore. One or two diesel generators are connected to the fixed voltage switchboard in parallel operation with Inter switchboard converter.

### Operating mode 2 Ship to Shore

The ship can provide power at either 440V 60Hz or 690V 60Hz to the shore or to another ship, while the own ship is powered by own generators or an own battery. Before the connection with another ship is made, this other ship is usually powered by its own generators. Synchronization before connecting to the other ship is done by the other ship. The following sub-modes are defined:
**Mode 2.1:** The inter switchboard converter powers the shore via the variable voltage switchboard. The inter switchboard converter is powered by one or two diesel generators connected to the fixed voltage switchboard.
**Mode 2.2:** The inter switchboard converter powers the shore via the variable voltage switchboard. The inter switchboard converter is powered by one or two diesel generators connected to the fixed voltage switchboard. One or two diesel generators are connected to the variable voltage switchboard in parallel operation with the inter switchboard converter.

### Operating mode 3 E-propulsion at low speed

In the low-speed range of electric propulsion operation (up to approximately 7kts), the Inter switchboard converter alone delivers power to the two electric propulsion motors (connected in parallel) at variable voltage and frequency. The inter switchboard converter draws this power from the fixed voltage switchboard, which may be powered by a single diesel generator or by two diesel generators.

In order to prevent cyclic loading of the diesel generator powering the fixed voltage switchboard, it is possible to operate one or both inverters of the inter switchboard converter in speed control or power control, or a combination of both, in addition to using the battery for peak shaving.

The following sub-mode is defined:
**Mode 3.1:** The fixed voltage switchboard is powered by one or two diesel generators. The inter switchboard converter powers the electric propulsion motors via the variable voltage switchboard.

### Operating mode 4 E-propulsion at high speed

On increasing vessel speed, when the load of a first diesel generator connected to the fixed voltage switchboard approaches 100%, a first diesel generator connected to the variable voltage switchboard is started. Now the former diesel generator (via the inter switchboard converter) and the latter diesel general (directly) provide the power required by the electric propulsion motors.

On increasing vessel speed, when the load of the diesel generator connected to the fixed voltage switchboard and the first diesel generator connected to the variable voltage switchboard approaches 100%, the second diesel generator connected to the variable switchboard is started.

On increasing vessel speed, when the load of the first diesel generator connected to the fixed voltage switchboard and the two diesel generators connected to the variable voltage switchboard approaches 100%, the second diesel general connected to the fixed voltage switchboard is started. Now, the ship's speed can be increased until the diesel generators connected to the variable voltage switchboard and the inter switchboard converter are all loaded to 100%, or to a lower value depending on the spinning reserve parameter that is active in the PMS.

If the rating of the inter switchboard converter is selected sufficiently high, then the starting sequence of the diesel generators is flexible. This means that the second diesel generator to be put on line may be the second diesel generator connected to the fixed voltage switchboard.

In order to prevent cyclic load variation on the diesel generators that power the variable voltage switchboard and operate close to the load limit curve, the battery is used for peak shaving. If a distinctive speed and power control method is selected, the drive is able to autonomously initiate the transition between speed control and power control. The following sub-mode is defined:
**Mode 4.1:** The fixed voltage switchboard is powered by one or two diesel generators. The inter switchboard converter powers the electric propulsion motors via the variable voltage switchboard. One or two diesel generators are connected to the variable voltage switchboard in parallel operation with the inter switchboard converter.

### Operating mode 5 Micro Grid

In Diesel-Direct operation (DD-operation), one diesel generator connected to the variable voltage switchboard can be used at reduced speed to power the ship's grid via the inter switchboard converter. The inter switchboard converter will convert the reduced voltage and frequency of the diesel generator to 690V 60Hz and deliver to the fixed voltage switchboard, for the ship's grid.

In mode 5, the inter switchboard converter operates with frequency and reactive voltage droop. In case a diesel generator is connected in parallel with the output of the inter switchboard converter, reactive power will be automatically shared between this diesel generator and the inter switchboard converter. Active load sharing will be accomplished by the PMS through controlling the speed setpoint of the generator and the frequency setpoint of the inter switchboard converter. The following sub-modes are defined:
**Mode 5.1:** The variable voltage switchboard is powered by one or two diesel generators. The inter switchboard converter powers the fixed voltage switchboard.
**Mode 5.2:** The variable voltage switchboard is powered by one or two diesel generators. The inter switchboard converter powers the fixed voltage switchboard. One or two diesel generators are connected to the fixed voltage switchboard in parallel operation with the inter switchboard converter.

### Operating mode 6 Shaft Generator

In DD-operation, the electric propulsion motors can be used as a shaft generator. In that case no diesel generators are required on line. The inter switchboard converter will convert the generated power to 690V 60Hz for the ship's grid. If for any reason it is considered necessary to start and connect a diesel generator, then this diesel generator is synchronized with the output of the inter switchboard converter and connected in parallel (i.e. to the fixed voltage switchboard).

In mode 6, the inter switchboard converter operates with frequency and reactive voltage droop. In case a diesel generator is connected in parallel with the output of the inter switchboard converter, reactive power will be automatically shared between this diesel generator and the inter switchboard converter. Active load sharing will be accomplished by the PMS through controlling the speed setpoint of the generator and the frequency setpoint of the Inter switchboard converter. The following sub-modes are defined:
**Mode 6.1:** The variable voltage switchboard is connected to both electric propulsion motors and powers the inter switchboard converter. The inter switchboard converter powers the fixed voltage switchboard.
**Mode 6.2:** The variable voltage switchboard is connected to both electric propulsion motors and powers the inter switchboard converter. The inter switchboard converter powers the fixed voltage switchboard. One or two diesel generators are connected to the fixed voltage switchboard in parallel operation with the inter switchboard converter.

### Operating mode 7 Sailing on Battery

In this mode, the battery is used for zero-emission-propulsion at low speed.

The following sub-mode is defined:
**Mode 7.1:** The inter switchboard converter powers the variable voltage switchboard and the fixed voltage switchboard. The inter switchboard converter is powered by the battery. Both electric propulsion motors are powered from the variable voltage switchboard. No diesel generators are in operation.

### Operating mode 8 Microgrid on battery

The following sub-mode is defined:
**Mode 8.1:** The battery provides the power to the inter switchboard converter and the inter switchboard converter powers the fixed voltage switchboard.

In order to support the above-listed operating modes, the two inverters of the inter switchboard converter of this embodiment are capable of:
- V/f-control optimized for the selected electric propulsion motors in island operation;
- V/f-control optimized for the selected electric propulsion motor for operation in parallel with the synchronous generator(s) of diesel generators. In this case, the share of the electric propulsion motor magnetizing current shall be controllable by the inter switchboard converter between zero and any value that will not lead to inverter overload. The active power share taken by the inter switchboard converter shall be controllable via the frequency setpoint input of the inter switchboard converter;
- Voltage control as Micro Grid-Converter;
- Synchronizing the switchboards, as necessary when transferring the grid load from one switchboard to the other;
- Synchronizing with the shore.

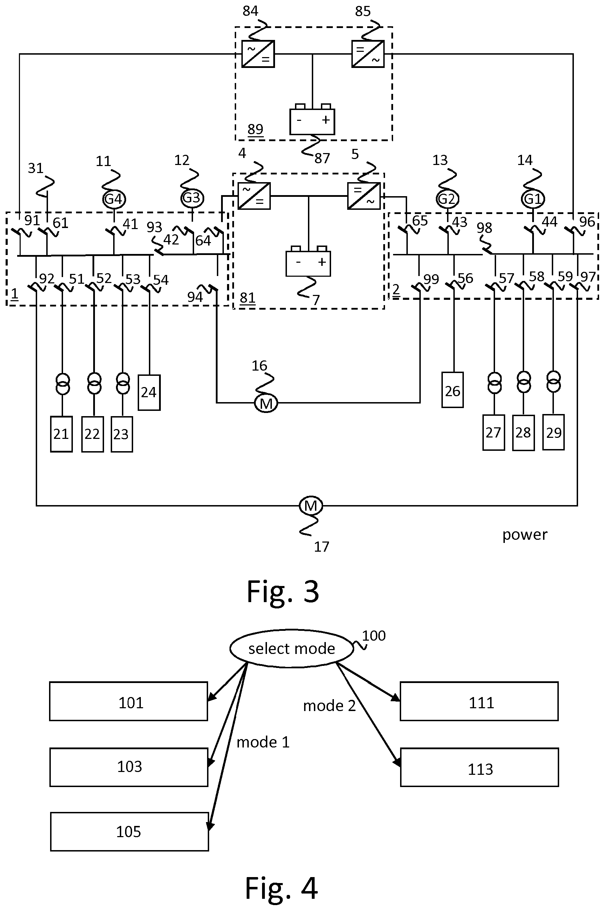

**Fig.3** shows a second embodiment of the propulsion system of the invention, which is a variation on the first embodiment of **Fig.1****.** In this second embodiment, the propulsion system comprises two inter switchboard converters **81** and **89,** which are identical to inter switchboard converter **9** of **Fig.1****.** Power converters **84** and **85** correspond to power converters **4** and **5,** respectively. Battery **98** corresponds to battery **7.**

Inter switchboard converter **81** is switchably coupled to the aft switchboard **1** via switch **64** and switchably coupled to the fore switchboard **2** via switch **65** in the same manner as was inter switchboard converter **9** of **Fig.1****.** Inter switchboard converter **89** is switchably coupled to the aft switchboard **1** via switch **91** and switchably coupled to the fore switchboard **2** via switch **96.** Thus, inter switchboard converters **81** and **89** can be independently coupled to aft switch board 1 or fore switch board **2** or both or none.

While in the first embodiment of **Fig.1****,** the electric propulsion motors **16** and **17** are coupled to each of the switchboards via the same switch, in the embodiment of **Fig.3****,** the electric propulsion motors **16** and **17** are coupled to each of the switchboards via different switches. Electric propulsion motor **17** is switchably coupled to the aft switchboard **1** via switch **92** and to the fore switchboard **2** via switch **97.** Electric propulsion motor **16** is switchably coupled to the aft switchboard **1** via switch **94** and to the fore switchboard **2** via switch **99.**

Another difference between the second embodiment of **Fig.3** and the first embodiment of **Fig.1** is the presence of bus tie-in relays **93** and **98.** The bus tie-in relay in the fixed voltage switchboard is typically only closed when at least one of the diesel generators in the fixed voltage switchboard is active. If no diesel generators are active in the variable voltage switchboard, the bus tie-in relay in the variable voltage switchboard may be closed, but it would typically be open to allow the electric propulsion motors to be controlled at different speeds (rotational frequencies).

In the embodiment of **Fig.3****,** the available power converter capacity has been distributed over two inter switch board converters. This has as benefit that until a certain speed, e.g. 11kts, the electric propulsion motors can be controlled separately. This allows the propulsion system to be used for ships with a fixed propeller and for Dynamic Position (DP) applications.

**Fig.4** shows an embodiment of a method controlling a propulsion system. The propulsion system comprises a variable voltage switchboard, a fixed voltage switchboard, and an inter switchboard converter coupled to the variable voltage switchboard and the fixed voltage switchboard. The inter switchboard converter comprises a first power converter coupled to the variable voltage switchboard, a second power converter coupled to the fixed voltage switchboard and the first power converter, and a battery coupled to the first power converter and the second power converter. The propulsion system further comprises one or more electric propulsion motors coupled to the variable voltage switchboard and one or more electric generators coupled to the fixed voltage switchboard. An embodiment of such a propulsion system is shown in **Fig.1****.**

A step **100** comprises allowing an operator to select the operating mode of the propulsion system. If the operator selects mode 1, steps **101, 103** and **105** are performed. Step **101** comprises controlling the one or more electric generators to generate electricity at a constant voltage and a constant frequency. Step 103 comprises controlling the second power converter to convert AC power from the one or more electric generators to DC power with a voltage suitable for the battery. Step **105** comprises controlling the first converter to convert DC power from the second power converter and the battery to AC power with a voltage and a frequency corresponding to a speed or power selected for the one or more electric propulsion motors.

If the operator selects mode 2, steps **111** and **113** are performed. Step **111** comprises controlling the one or more electric generators not to generate electricity. Step **113** comprises controlling the first converter to convert DC power from the battery to AC power. The AC power is provided to at least the one or more electric propulsion motors.

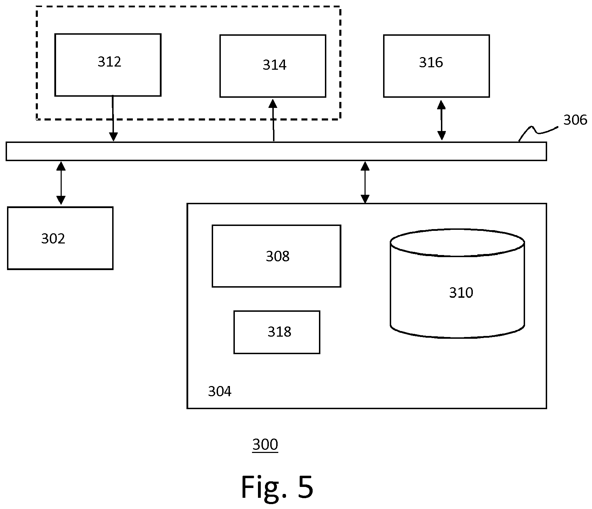

**Fig.5** depicts a block diagram illustrating an exemplary data processing system that may perform the method as described with reference to **Fig.** 4.

As shown in **Fig.5****,** the data processing system **300** may include at least one processor **302** coupled to memory elements **304** through a system bus **306.** As such, the data processing system may store program code within memory elements **304.** Further, the processor **302** may execute the program code accessed from the memory elements **304** via a system bus **306.** In one aspect, the data processing system may be implemented as a computer that is suitable for storing and/or executing program code. It should be appreciated, however, that the data processing system **300** may be implemented in the form of any system including a processor and a memory that is capable of performing the functions described within this specification.

The memory elements **304** may include one or more physical memory devices such as, for example, local memory **308** and one or more bulk storage devices **310.** The local memory may refer to random access memory or other nonpersistent memory device(s) generally used during actual execution of the program code. A bulk storage device may be implemented as a hard drive or other persistent data storage device. The processing system **300** may also include one or more cache memories (not shown) that provide temporary storage of at least some program code in order to reduce the number of times program code must be retrieved from the bulk storage device **310** during execution.

Input/output (I/O) devices depicted as an input device **312** and an output device **314** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig.5** with a dashed line surrounding the input device **312** and the output device **314).** An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **316** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **300,** and a data transmitter for transmitting data from the data processing system **300** to said systems, devices and/or networks. Modems, cable modems, and Ethernet cards are examples of different types of network adapter that may be used with the data processing system **300.**

As pictured in **Fig.5****,** the memory elements **304** may store an application **318.** In various embodiments, the application **318** may be stored in the local memory **308,** he one or more bulk storage devices **310,** or separate from the local memory and the bulk storage devices. It should be appreciated that the data processing system **300** may further execute an operating system (not shown in **Fig.5****)** that can facilitate execution of the application **318.** The application **318,** being implemented in the form of executable program code, can be executed by the data processing system **300,** e.g., by the processor **302.** Responsive to executing the application, the data processing system **300** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state randomaccess semiconductor memory) on which alterable information is stored. The computer program may be run on the processor **302** described herein.

The description of embodiments of the present invention has been presented for purposes of illustration, but it is not intended to be exhaustive or limited to the implementations in the form disclosed. Many modifications and variations will be apparent to those of ordinary skill in the art without departing from the scope and spirit of the present invention, only defined by the appended claims. The embodiments were chosen and described in order to best explain the principles and some practical applications of the present invention, and to enable others of ordinary skill in the art to understand the present invention.

## Claims

1. A propulsion system controller (71) configured to control a propulsion system of a watercraft, said propulsion system comprising:
- a switchboard (1,2);
- a further switchboard (1,2);
- an inter switchboard converter (9) coupled to said switchboard (1,2) and said further switchboard (1,2), said inter switchboard converter (9) comprising a first power converter (4,5) coupled to said switchboard (1,2), a second power converter (4,5) coupled to said further switchboard (1,2) and said first power converter (4,5), and a battery (7) coupled to said first power converter (1,2) and said second power converter (1,2),
- one or more electric propulsion motors (16,17) coupled to said switchboard (1,2); and
- one or more electric generators (11,12,13,14) coupled to said further switchboard (1,2),
**characterized in that** said switchboard is a variable voltage switchboard, said further switchboard is a fixed voltage switchboard, and said controller (71) is configured to be set to one of a plurality of modes, and is further configured to:
- in a first of said plurality of modes , control said one or more electric generators (11,12,13,14) to generate electricity at a constant voltage and a constant frequency, to control said second power converter (4,5) to convert AC power from said one or more electric generators (11,12,13,14) to DC power with a voltage suitable for said battery (7), and to control said first converter (4,5) to convert DC power from said second power converter (4,5) and said battery (7) to AC power with a voltage and a frequency corresponding to a speed or power selected for said one or more electric propulsion motors (16,17), and
- in a second of said plurality of modes , control said one or more electric generators (11,12,13,14) not to generate electricity and to control said first converter (4,5) to convert DC power from said battery (7) to AC power, said AC power being provided to at least said one or more electric propulsion motors (16,17).

2. A propulsion system controller (71) as claimed in claim 1, wherein said watercraft comprises a power grid (21-24,26-29), the controller (71) being configured to couple said power grid (21-24,26-29) to said fixed voltage switchboard (1,2).

3. A propulsion system controller (71) as claimed in claim 1 or 2, wherein said propulsion system switchboard and further switchboard correspond to a first switchboard (1) and a second switchboard (2) and said controller (71) is configured to select one of said first switchboard (1) and said second switchboard (2) as said variable voltage switchboard and select as said fixed voltage switchboard said first (1) or second (2) switchboard not selected as said variable voltage switchboard.

4. A propulsion system controller (71) as claimed in claim 3, wherein said one or more electric propulsion motors (16,17) are switchably coupled to said first switchboard (1) and said second switchboard (2), and said controller (71) is configured in said first mode and said second mode to cause a coupling between said one or more electric propulsion motors (16,17) and said first (1) or second (2) switchboard selected as variable voltage switchboard.

5. A propulsion system controller (71) as claimed in claim 3 or 4, wherein said watercraft comprises a power grid (21-24,26-29), said power grid (21-24,26-29) being switchably coupled to said first switch board (1) and said second switchboard (2), and said controller (71) is configured in said first mode, said second mode or in another of said plurality of modes to cause a coupling between said power grid (21-24,26-29) and said first (1) or second switchboard (2) selected as fixed voltage switchboard.

6. A propulsion system controller (71) as claimed in any one of the preceding claims, wherein said controller is configured to control one or more further electric generators (11,12,13,14) comprised in the propulsion system and coupled to said variable voltage switchboard (1,2)

7. A propulsion system controller (71) as claimed in claim 6, wherein said controller (71) is configured in said first mode and/or in another of said plurality of modes to control said one or more further electric generators (11,12,13,14) to generate electricity at said voltage and said frequency corresponding to said speed or power selected for said one or more electric propulsion motors (16,17).

8. A propulsion system controller (71) as claimed in any one of the preceding claims, wherein each of said first power converter (4,5) and said second power converter (4,5) comprises a three-phase inverter.

9. A propulsion system controller (71) as claimed in any one of the preceding claims, wherein the controller is configured to obtain information indicating said voltage suitable for said battery (7) is obtained from a battery management system of said battery (7).

10. A propulsion system comprising a propulsion system controller (71) both according to any one of claims 1-9

11. A propulsion system as claimed in claim 10 wherein one of switchboards (1, 2) is connectable to a power connector on a shore or other watercraft.

12. A watercraft comprising the propulsion system of any of claims 10 or 11.

13. A method of controlling a propulsion system, said propulsion system comprising a switchboard; a further switchboard; an inter switchboard converter coupled to said switchboard and said further switchboard, said inter switchboard converter comprising a first power converter coupled to said switchboard, a second power converter coupled to said further switchboard and said first power converter, and a battery coupled to said first power converter and said second power converter; one or more electric propulsion motors coupled to said switchboard; and one or more electric generators coupled to said further switchboard, **characterized in that** said switchboard is a variable voltage switchboard, said further switchboard is a fixed voltage switchboard, and said method comprises:
- in a first of a plurality of modes, controlling (101) said one or more electric generators to generate electricity at a constant voltage and a constant frequency, controlling (103) said second power converter to convert AC power from said one or more electric generators to DC power with a voltage suitable for said battery, and controlling (105) said first converter to convert DC power from said second power converter and said battery to AC power with a voltage and a frequency corresponding to a speed or power selected for said one or more electric propulsion motors; and
- in a second of said plurality of modes, controlling (111) said one or more electric generators not to generate electricity and controlling (113) said first converter to convert DC power from said battery to AC power, said AC power being provided to at least said one or more electric propulsion motors.

14. A computer program or suite of computer programs comprising at least one software code portion the software code portion, when run on a computer system, being configured for performing the method of claim 13.

15. A computer program product storing at least one software code portion, the software code portion, when run on a computer system, being configured for performing the method of claim 13.

## Patentansprüche

1. Antriebssystemsteuerung (71), die konfiguriert ist, um ein Antriebssystem eines Wasserfahrzeugs zu steuern, wobei das Antriebssystem aufweist:
- eine Schaltanlage (1, 2);
- eine weitere Schaltanlage (1, 2);
- einen Umrichter (9) zwischen Schaltanlagen, der mit der Schaltanlage (1, 2) und der weiteren Schaltanlage (1, 2) gekoppelt ist, wobei der Umrichter (9) zwischen Schaltanlagen einen ersten Leistungswandler (4, 5), der mit der Schaltanlage (1, 2) gekoppelt ist, einen zweiten Leistungswandler (4, 5), der mit der weiteren Schaltanlage (1, 2) und dem ersten Leistungswandler (4, 5) gekoppelt ist, und eine Batterie (7), die mit dem ersten Leistungswandler (1, 2) und dem zweiten Leistungswandler (1, 2) gekoppelt ist, aufweist,
- einen oder mehrere elektrische Antriebsmotoren (16, 17), die mit der Schaltanlage (1, 2) gekoppelt sind; und
- einen oder mehrere elektrische Generatoren (11, 12, 13, 14), die mit der weiteren Schaltanlage (1, 2) gekoppelt sind,
**dadurch gekennzeichnet, dass** die Schaltanlage eine Schaltanlage mit veränderlicher Spannung ist, wobei die weitere Schaltanlage eine Schaltanlage mit fester Spannung ist, und die Steuerung (71) konfiguriert ist, um auf eine von mehreren Betriebsarten festgelegt zu werden, und ferner konfiguriert ist, um:
- in einer ersten der mehreren Betriebsarten den einen oder die mehreren elektrischen Generatoren (11, 12, 13, 14) zu steuern, um Elektrizität mit einer konstanten Spannung und einer konstanten Frequenz zu erzeugen, den zweiten Leistungswandler (4, 5) zu steuern, um Wechselstromleistung von dem einen oder den mehreren elektrischen Generatoren (11, 12, 13, 14) in Gleichstromleistung mit einer für die Batterie (7) geeigneten Spannung umzuwandeln und um den ersten Wandler (4, 5) zu steuern, um Gleichstromleistung von dem zweiten Leistungswandler (4, 5) und der Batterie (7) in Wechselstromleistung mit einer Spannung und einer Frequenz umzuwandeln, die einer Geschwindigkeit oder einer Leistung entsprechen, die für den einen oder die mehreren elektrischen Antriebsmotoren (16, 17) ausgewählt wird, und
- in einer zweiten der mehreren Betriebsarten den einen oder die mehreren elektrischen Generatoren (11, 12, 13, 14) zu steuern, so dass sie keine Elektrizität erzeugen, und den ersten Wandler (4, 5) zu steuern, um Gleichstromleistung von der Batterie (7) in Wechselstromleistung umzuwandeln, wobei die Wechselstromleistung an den wenigstens einen oder die mehreren elektrischen Antriebsmotoren (16, 17) bereitgestellt wird.

2. Antriebssystemsteuerung (71) nach Anspruch 1, wobei das Wasserfahrzeug ein Stromnetz (21-24, 26-29) aufweist, wobei die Steuerung (71) konfiguriert ist, um das Stromnetz (21-24, 26-29) mit der Schaltanlage (1, 2) mit fester Spannung zu koppeln.

3. Antriebssystemsteuerung (71) nach Anspruch 1 oder 2, wobei die Antriebssystemschaltanlage und die weitere Schaltanlage einer ersten Schaltanlage (1) und einer zweiten Schaltanlage (2) entsprechen, und wobei die Steuerung (71) konfiguriert ist, um die erste Schaltanlage (1) oder die zweite Schaltanlage (2) als die Schaltanlage mit veränderlicher Spannung auszuwählen und als die Schaltanlage mit fester Spannung die erste (1) oder zweite (2) Schaltanlage auszuwählen, die nicht als die Schaltanlage mit veränderlicher Spannung ausgewählt wird.

4. Antriebssystemsteuerung (71) nach Anspruch 3, wobei der eine oder die mehreren Antriebsmotoren (16, 17) schaltbar mit der ersten Schaltanlage (1) und der zweiten Schaltanlage (2) gekoppelt sind, und wobei die Steuerung (71) in der ersten Betriebsart und der zweiten Betriebsart konfiguriert ist, um eine Kopplung zwischen dem einen oder den mehreren elektrischen Antriebsmotoren (16, 17) und der ersten (1) oder zweiten (2) Schaltanlage, die als Schaltanlage mit veränderlicher Spannung ausgewählt wird, zu bewirken.

5. Antriebssystemsteuerung (71) nach Anspruch 3 oder 4, wobei das Wasserfahrzeug ein Stromnetz (21-24, 26-29) aufweist, wobei das Stromnetz (21-24, 26-29) schaltbar mit der ersten Schaltanlage (1) und der zweiten Schaltanlage (2) gekoppelt ist, und wobei die Steuerung (71) in der ersten Betriebsart, der zweiten Betriebsart oder in einer anderen der mehreren Betriebsarten konfiguriert ist, um eine Kopplung zwischen dem Stromnetz (21-24, 26-29) und der ersten (1) oder zweiten Schaltanlage (2), die als die Schaltanlage mit fester Spannung ausgewählt wird, zu bewirken.

6. Antriebssystemsteuerung (71) nach einem der vorhergehenden Ansprüche, wobei die Steuerung konfiguriert ist, um einen oder mehrere weitere elektrische Generatoren (11, 12, 13, 14), die in dem Antriebssystem enthalten sind und mit der Schaltanlage (1, 2) mit veränderlicher Spannung gekoppelt sind, zu steuern.

7. Antriebssystemsteuerung (71) nach Anspruch 7, wobei die Steuerung (71) in der ersten Betriebsart und/oder in einer anderen der mehreren Betriebsarten konfiguriert ist, um den einen oder die mehreren weiteren elektrischen Generatoren (11, 12, 13, 14) zu steuern, um Elektrizität mit der Spannung und der Frequenz zu erzeugen, die der Geschwindigkeit oder Leistung entsprechen, die für den einen oder die mehreren elektrischen Antriebsmotoren (16, 17) ausgewählt wird.

8. Antriebssystemsteuerung (71) nach einem der vorhergehenden Ansprüche, wobei der erste Leistungswandler (4, 5) und der zweite Leistungswandler (4, 5) jeweils einen Drei-Phasen-Inverter aufweisen.

9. Antriebssystemsteuerung (71) nach einem der vorhergehenden Ansprüche, wobei die Steuerung konfiguriert ist, um Informationen zu gewinnen, welche anzeigen, dass die für die Batterie (7) geeignete Spannung von dem Batterieverwaltungssystem der Batterie (7) gewonnen wird.

10. Antriebssystem, das eine Antriebssystemsteuerung (71) aufweist, wobei beide nach einem der Ansprüche 1 - 9 sind.

11. Antriebssystem nach Anspruch 10, wobei eine der Schaltanlagen (1, 2) mit einem Leistungsverbinder an einem Ufer oder einem anderen Wasserfahrzeug verbindbar ist.

12. Wasserfahrzeug, welches das Antriebssystem nach einem der Ansprüche 10 oder 11 aufweist.

13. Verfahren zur Steuerung eines Antriebssystems,
wobei das Antriebssystem aufweist: eine Schaltanlage; eine weitere Schaltanlage; einen Umrichter zwischen Schaltanlagen, der mit der Schaltanlage und der weiteren Schaltanlage gekoppelt ist, wobei der Umrichter zwischen Schaltanlagen einen ersten Leistungswandler, der mit der Schaltanlage gekoppelt ist, einen zweiten Leistungswandler, der mit der weiteren Schaltanlage und dem ersten Leistungswandler gekoppelt ist, und eine Batterie, die mit dem ersten Leistungswandler und dem zweiten Leistungswandler gekoppelt ist, aufweist; einen oder mehrere elektrische Antriebsmotoren, die mit der Schaltanlage gekoppelt sind; und einen oder mehrere elektrische Generatoren, die mit der weiteren Schaltanlage gekoppelt sind,
**dadurch gekennzeichnet, dass** die Schaltanlage eine Schaltanlage mit veränderlicher Spannung ist, wobei die weitere Schaltanlage eine Schaltanlage mit fester Spannung ist, und wobei das Verfahren aufweist:
- in einer ersten von mehreren Betriebsarten Steuern (101) des einen oder der mehreren elektrischen Generatoren, um Elektrizität mit einer konstanten Spannung und einer konstanten Frequenz zu erzeugen, Steuern (103) des zweiten Leistungswandlers, um Wechselstromleistung von dem einen oder den mehreren elektrischen Generatoren in Gleichstromleistung mit einer für die Batterie geeigneten Spannung umzuwandeln, und Steuern (105) des ersten Wandlers, um Gleichstromleistung von dem zweiten Leistungswandler und der Batterie in Wechselstromleistung mit einer Spannung und einer Frequenz umzuwandeln, die einer Geschwindigkeit oder einer Leistung entsprechen, die für den einen oder die mehreren elektrischen Antriebsmotoren ausgewählt wird, und
- in einer zweiten der mehreren Betriebsarten Steuern (111) des einen oder der mehreren elektrischen Generatoren, so dass sie keine Elektrizität erzeugen, und Steuern (113) des ersten Wandlers, um Gleichstromleistung von der Batterie in Wechselstromleistung umzuwandeln, wobei die Wechselstromleistung an den wenigstens einen oder die mehreren elektrischen Antriebsmotoren bereitgestellt wird.

14. Computerprogramm oder Satz von Computerprogrammen, das/die wenigstens einen Software-Codeabschnitt aufweist/aufweisen, wobei der Software-Codeabschnitt, wenn er auf einem Computersystem ausgeführt wird, konfiguriert ist, um das Verfahren nach Anspruch 13 durchzuführen.

15. Computerprogrammprodukt, das wenigstens einen Software-Codeabschnitt speichert, wobei der Software-Codeabschnitt, wenn er auf einem Computersystem ausgeführt wird, konfiguriert ist, um das Verfahren nach Anspruch 13 durchzuführen.

## Revendications

1. Dispositif de commande (71) de système de propulsion configuré pour commander un système de propulsion d'un véhicule nautique, ledit système de propulsion comprenant :
- un tableau électrique (1, 2) ;
- un tableau électrique supplémentaire (1, 2) ;
- un convertisseur entre les tableaux électriques (9) couplé audit tableau électrique (1, 2) et audit tableau électrique supplémentaire (1, 2), ledit convertisseur entre les tableaux électriques (9) comprenant un premier convertisseur de puissance (4, 5) couplé audit tableau électrique (1, 2), un second convertisseur de puissance (4, 5) couplé audit tableau électrique supplémentaire (1, 2), et audit premier convertisseur de puissance (4, 5), et une batterie (7) couplée audit premier convertisseur de puissance (1, 2) et audit second convertisseur de puissance (1, 2),
- un ou plusieurs moteurs de propulsion électriques (16, 17) couplés audit tableau électrique (1, 2) ; et
- un ou plusieurs générateurs électriques (11, 12, 13, 14) couplés audit tableau électrique supplémentaire (1, 2),
**caractérisé en ce que** ledit tableau électrique est un tableau électrique à tension variable, ledit tableau électrique supplémentaire est un tableau électrique à tension fixe, et ledit dispositif de commande (71) est configuré pour être réglé sur l'un d'une pluralité de modes, et est en outre configuré pour :
- dans un premier de ladite pluralité de modes, commander lesdits un ou plusieurs générateurs électriques (11, 12, 13, 14) pour générer de l'électricité à une tension constante et une fréquence constante, pour commander ledit second convertisseur de puissance (4, 5) pour convertir une puissance en courant alternatif provenant desdits un ou plusieurs générateurs électriques (11, 12, 13, 14) en puissance à courant continu avec une tension appropriée pour ladite batterie (7), et pour commander ledit premier convertisseur (4, 5) pour convertir une puissance en courant continu provenant dudit second convertisseur de puissance (4, 5) et de ladite batterie (7) en puissance en courant alternatif avec une tension et une fréquence correspondant à une vitesse ou une puissance choisie pour lesdits un ou plusieurs moteurs de propulsion électriques (16, 17), et
- dans un second de ladite pluralité de modes, commander lesdits un ou plusieurs générateurs électriques (11, 12, 13, 14) pour ne pas générer d'électricité et pour commander ledit premier convertisseur (4, 5) pour convertir une puissance en courant continu provenant de ladite batterie (7) en puissance en courant alternatif, ladite puissance en courant alternatif étant fournie au moins auxdits un ou plusieurs moteurs de propulsion électriques (16, 17).

2. Dispositif de commande (71) de système de propulsion selon la revendication 1, dans lequel ledit véhicule nautique comprend un réseau électrique (21 à 24, 26 à 29), le dispositif de commande (71) étant configuré pour coupler ledit réseau électrique (21 à 24, 26 à 29) audit tableau électrique (1, 2) à tension fixe.

3. Dispositif de commande (71) de système de propulsion selon la revendication 1 ou 2, dans lequel ledit tableau électrique et tableau électrique supplémentaire du système de propulsion correspondent à un premier tableau électrique (1) et à un second tableau électrique (2) et ledit dispositif de commande (71) est configuré pour choisir l'un dudit premier tableau électrique (1) et dudit second tableau électrique (2) en tant que dit tableau électrique à tension variable et choisir en tant que dit tableau électrique à tension fixe ledit premier (1) ou second (2) tableau électrique qui n'est pas choisi en tant que dit tableau électrique à tension variable.

4. Dispositif de commande (71) de système de propulsion selon la revendication 3, dans lequel lesdits un ou plusieurs moteurs de propulsion électriques (16, 17) sont couplés de façon commutable audit premier tableau électrique (1) et audit second tableau électrique (2), et ledit dispositif de commande (71) est configuré dans ledit premier mode et ledit second mode pour provoquer un couplage entre lesdits un ou plusieurs moteurs de propulsion électriques (16, 17) et ledit premier (1) ou second (2) tableau électrique choisi en tant que tableau électrique à tension variable.

5. Dispositif de commande (71) de système de propulsion selon la revendication 3 ou 4, dans lequel ledit véhicule nautique comprend un réseau électrique (21 à 24, 26 à 29), ledit réseau électrique (21 à 24, 26 à 29) étant couplé de façon commutable audit premier tableau électrique (1) et audit second tableau électrique (2), et ledit dispositif de commande (71) est configuré dans ledit premier mode, ledit second mode ou dans un autre de ladite pluralité de modes pour provoquer un couplage entre ledit réseau électrique (21 à 24, 26 à 29) et ledit premier (1) ou second (2) tableau électrique choisi en tant que tableau électrique à tension fixe.

6. Dispositif de commande (71) de système de propulsion selon l'une quelconque des revendications précédentes, dans lequel ledit dispositif de commande est configuré pour commander un ou plusieurs générateurs électriques (11, 12, 13, 14) supplémentaires compris dans le système de propulsion et couplés audit tableau électrique (1, 2) à tension variable.

7. Dispositif de commande (71) de système de propulsion selon la revendication 6, dans lequel ledit dispositif de commande (71) est configuré dans ledit premier mode et/ou dans un autre de ladite pluralité de modes pour commander lesdits un ou plusieurs générateurs électriques (11, 12, 13, 14) supplémentaires pour générer de l'électricité à ladite tension et à ladite fréquence correspondant à ladite vitesse ou puissance choisie pour lesdits un ou plusieurs moteurs de propulsion électriques (16, 17).

8. Dispositif de commande (71) de système de propulsion selon l'une quelconque des revendications précédentes, dans lequel chacun dudit premier convertisseur de puissance (4, 5) et dudit second convertisseur de puissance (4, 5) comprend un onduleur triphasé.

9. Dispositif de commande (71) de système de propulsion selon l'une quelconque des revendications précédentes, dans lequel le dispositif de commande est configuré pour obtenir des informations indiquant que ladite tension appropriée pour ladite batterie (7) est obtenue à partir d'un système de gestion de batterie de ladite batterie (7).

10. Système de propulsion comprenant un dispositif de commande (71) de système de propulsion selon l'une quelconque des revendications 1 à 9.

11. Système de propulsion selon la revendication 10, dans lequel l'un des tableaux électrique (1,2) peut être connecté à un connecteur de puissance sur arrivage ou un autre véhicule nautique.

12. Véhicule nautique comprenant le système de propulsion de l'une quelconque des revendications 10 ou 11.

13. Procédé de commande d'un système de propulsion,
ledit système de propulsion comprenant un tableau électrique, un tableau électrique supplémentaire ; un convertisseur entre les tableaux électriques couplé audit tableau électrique et audit tableau électrique supplémentaire, ledit convertisseur entre les tableaux électriques comprenant un premier convertisseur de puissance couplé audit tableau électrique, un second convertisseur de puissance couplé audit tableau électrique supplémentaire et audit premier convertisseur de puissance, et une batterie couplée audit premier convertisseur de puissance et audit second convertisseur de puissance ; un ou plusieurs moteurs de propulsion électriques couplés audit tableau électrique ; et un ou plusieurs générateurs électriques couplés audit tableau électrique supplémentaire,
**caractérisé en ce que** ledit tableau électrique est un tableau électrique à tension variable, ledit tableau électrique supplémentaire est un tableau électrique à tension fixe, et ledit procédé comprend :
- dans un premier d'une pluralité de modes, la commande (101) desdits un ou plusieurs générateurs électriques pour générer de l'électricité à une tension constante et une fréquence constante, la commande (103) dudit second convertisseur de puissance pour convertir une puissance en courant alternatif provenant desdits un ou plusieurs générateurs électriques en puissance à courant continu avec une tension appropriée pour ladite batterie, et la commande (105) dudit premier convertisseur pour convertir une puissance en courant continu provenant dudit second convertisseur de puissance et de ladite batterie en puissance en courant alternatif avec une tension et une fréquence correspondant à une vitesse ou puissance choisie pour lesdits un ou plusieurs moteurs de propulsion électriques ; et
- dans un second de ladite pluralité de modes, la commande (111) desdits un ou plusieurs générateurs électriques pour ne pas générer d'électricité et la commande (113) dudit premier convertisseur pour convertir une puissance en courant continu provenant de ladite batterie en puissance en courant alternatif, ladite puissance en courant alternatif étant fournie au moins auxdits un ou plusieurs moteurs de propulsion électriques.

14. Programme d'ordinateur ou suite de programmes d'ordinateur comprenant au moins une portion de code logiciel, la portion de code logiciel, lorsqu'elle est exécutée sur un système d'ordinateur, étant configurée pour réaliser le procédé de la revendication 13.

15. Un produit programme d'ordinateur stockant au moins une portion de code logiciel, la portion de code logiciel, lorsqu'elle est exécutée sur un système d'ordinateur, étant configurée pour réaliser le procédé de la revendication 13.
